# FASCICULE DE BREVET EUROPEEN

(11) **EP 3 493 357 B1**
(45) Date de publication et mention de la délivrance du brevet: **13.05.2020**
(21) Numéro de dépôt: 18207639.8
(22) Date de dépôt: 21.11.2018
(51) Int. Cl.: H02J 7/35, H02M 1/32

(54) **CIRCUIT DE RECHARGE D'UNE BATTERIE ÉLECTRIQUE AU MOYEN D'UN MODULE PHOTOVOLTAÏQUE**
SCHALTKREIS ZUM AUFLADEN EINER ELEKTROBATTERIE MITHILFE EINES FOTOVOLTAIKMODULS
CHARGING CIRCUIT OF AN ELECTRIC BATTERY BY MEANS OF A PHOTOVOLTAIC MODULE

(30) Priorité: 01.12.2017 FR 1761509
(43) Date de publication de la demande: 05.06.2019
(73) Titulaire: Commissariat à l'Energie Atomique et aux Energies Alternatives, 75015 Paris (FR)
(72) Inventeur: VERVAART, Mark, 73420 MERY (FR)
(74) Mandataire: Cabinet Beaumont

(56) Documents cités:
- EP-A1- 3 247 014
- US-A1- 2013 257 409
- US-A1- 2015 263 621

## Description

### Domaine

La présente demande concerne un circuit de recharge d'une batterie électrique au moyen d'un module photovoltaïque. Elle vise plus particulièrement un circuit de recharge protégé contre une déconnexion intempestive de la batterie.

### Exposé de l'art antérieur

Il existe de nombreuses applications, par exemple des systèmes d'éclairage autonomes, dans lesquelles une batterie électrique rechargeable est chargée au moyen d'un module photovoltaïque.

De façon classique, comme divulgué dans le document US2013/257409 A1, un circuit de recharge d'une batterie électrique au moyen d'un module photovoltaïque comprend :
- un convertisseur à découpage continu-continu ayant des bornes d'entrée reliées aux bornes du module photovoltaïque et des bornes de sortie reliées aux bornes de la batterie ; et
- un circuit de contrôle adapté à commander le convertisseur à découpage pour transférer de l'énergie électrique de ses bornes d'entrée vers ses bornes de sortie, c'est-à-dire du module photovoltaïque vers la batterie, afin de recharger la batterie.

Généralement, le circuit de contrôle est relié aux bornes de la batterie pour son alimentation.

Un problème qui se pose est que lorsque la batterie est déconnectée de façon intempestive, c'est-à-dire alors que le module photovoltaïque est encore connecté à l'entrée du circuit de recharge et que le circuit de contrôle est actif, c'est-à-dire qu'il commande le convertisseur à découpage pour transférer de l'énergie électrique de ses bornes d'entrée vers ses bornes de sortie, il existe un risque élevé de destruction du circuit de recharge, et en particulier du circuit de contrôle du convertisseur à découpage.

Pour limiter ce risque, les fabricants de circuits de recharge de ce type préconisent de ne jamais déconnecter la batterie électrique du circuit de recharge sans avoir au préalable déconnecté le module photovoltaïque.

Il subsiste cependant toujours un risque que cette préconisation ne soit pas suivie par l'utilisateur.

Il serait donc souhaitable de pouvoir disposer d'un circuit de recharge d'une batterie électrique au moyen d'un module photovoltaïque, ce circuit étant protégé de façon intrinsèque contre une déconnexion intempestive de la batterie.

### Résumé

Ainsi, un mode de réalisation prévoit un circuit de recharge d'une batterie électrique au moyen d'un module photovoltaïque, comportant : des première et deuxième bornes d'entrée destinées à être reliées respectivement à des première et deuxième bornes du module photovoltaïque ; des première et deuxième bornes de sortie destinées à être reliées respectivement à des première et deuxième bornes de la batterie ; un convertisseur à découpage comportant des première et deuxième bornes d'entrée reliées respectivement aux première et deuxième bornes d'entrée du circuit de recharge et des première et deuxième bornes de sortie reliées respectivement aux première et deuxième bornes de sortie du circuit de recharge ; un circuit de contrôle du convertisseur à découpage, comportant des première et deuxième bornes d'alimentation reliées respectivement aux première et deuxième bornes de sortie du circuit de recharge ; un interrupteur de protection reliant la première borne de sortie du convertisseur à découpage à la première borne de sortie du circuit de recharge ; et un circuit de détection de surtension configuré pour, lorsque la tension entre les première et deuxième bornes de sortie du circuit de recharge dépasse un seuil, commander l'ouverture de l'interrupteur de protection et l'arrêt du convertisseur à découpage pendant une période d'inhibition prédéterminée.

Selon un mode de réalisation, le circuit de détection de surtension est en outre configuré pour, à l'issue de la période d'inhibition, commander la fermeture de l'interrupteur de protection et le redémarrage du convertisseur à découpage.

Selon un mode de réalisation, le circuit de contrôle est configuré pour commander le convertisseur à découpage en fonction de la tension et/ou du courant de sortie du module photovoltaïque, mesurés sur les première et/ou deuxième bornes d'entrée du circuit de recharge.

Selon un mode de réalisation, le circuit de contrôle est configuré pour adapter automatiquement la commande du convertisseur à découpage de façon à maximiser la puissance de sortie du module photovoltaïque.

Selon un mode de réalisation, le circuit de détection de surtension comprend un comparateur dont la sortie est reliée à un noeud de recharge d'un circuit de temporisation par l'intermédiaire d'une diode.

Selon un mode de réalisation, le circuit de temporisation comprend un premier condensateur et une première résistance reliés en parallèle entre le noeud de recharge du circuit de temporisation et la deuxième borne de sortie du circuit de recharge.

Selon un mode de réalisation, le circuit de détection de surtension comprend une diode Zener reliée en série avec une deuxième résistance entre les première et deuxième bornes de sortie du circuit de recharge, le comparateur ayant une borne d'entrée positive reliée au point milieu entre la diode Zener et la deuxième résistance et une borne d'entrée négative reliée à un noeud d'application d'une tension de référence.

Selon un mode de réalisation, le circuit de détection de surtension comprend en outre un pont diviseur de tension résistif comprenant une troisième résistance en série avec une quatrième résistance entre les première et deuxième bornes de sortie du circuit de recharge, le noeud d'application de la tension de référence étant relié au point milieu entre les troisième et quatrième résistances.

Selon un mode de réalisation, le noeud de recharge du circuit de temporisation est relié à une borne de commande de l'interrupteur de protection, et à une borne de commande du circuit de contrôle du convertisseur à découpage.

Un autre mode de réalisation prévoit un système comportant un module photovoltaïque, une batterie électrique et le circuit de recharge mentionné ci-dessus, dans lequel les première et deuxième bornes d'entrée du circuit de recharge sont reliées respectivement à des première et deuxième bornes du module photovoltaïque, et dans lequel les première et deuxième bornes de sortie du circuit de recharge sont reliées respectivement à des première et deuxième bornes de la batterie.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique simplifié illustrant, sous forme de blocs, un exemple d'un système de recharge d'une batterie électrique au moyen d'un module photovoltaïque ;
la figure 2 est un schéma électrique illustrant plus en détail un exemple de réalisation d'un convertisseur à découpage du système de la figure 1 ;
la figure 3 est un schéma électrique simplifié illustrant, sous forme de blocs, un exemple d'un mode de réalisation d'un système de recharge d'une batterie électrique au moyen d'un module photovoltaïque ; et
la figure 4 est un schéma électrique illustrant plus en détail un exemple de réalisation d'une partie du système de la figure 3.

### Description détaillée

De mêmes éléments ont été désignés par de mêmes références dans les différentes figures. Par souci de clarté, seuls les éléments utiles à la compréhension des modes de réalisation décrits ont été représentés et sont détaillés. En particulier, les diverses utilisations qui peuvent être faites des circuits de recharge décrits n'ont pas été détaillées, les modes de réalisation décrits étant compatibles avec les applications usuelles d'un circuit de recharge d'une batterie électrique au moyen d'un module photovoltaïque. Par ailleurs, dans les exemples de circuits de recharge décrits, la réalisation du circuit de contrôle du convertisseur à découpage n'a pas été détaillée, la réalisation de ce circuit étant à la portée de l'homme du métier à partir des indications fonctionnelles de la présente description. Le circuit de contrôle pourra par exemple être réalisé en électronique analogique et/ou en électronique numérique, par exemple au moyen d'un microcontrôleur. Dans la présente description, on utilisera le terme "connecté" pour désigner une liaison électrique directe, sans composant électronique intermédiaire, par exemple au moyen d'une piste conductrice, et le terme "couplé" ou le terme "relié", pour désigner soit une liaison électrique directe (signifiant alors "connecté") soit une liaison via un ou plusieurs composants intermédiaires (résistance, condensateur, inductance, etc.). Sauf précision contraire, les expressions "approximativement", "sensiblement", et "de l'ordre de" signifient à 10 % près, de préférence à 5 % près.

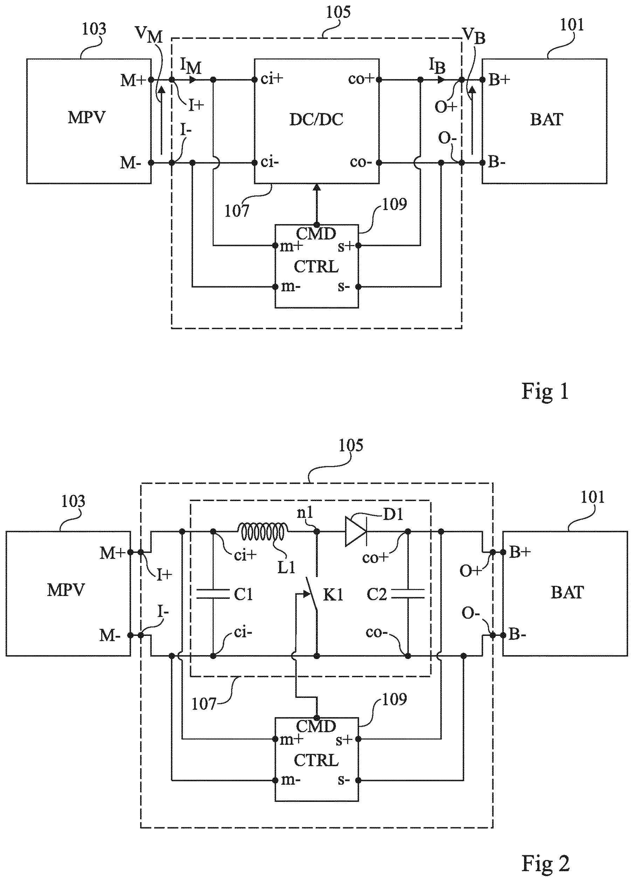

La figure 1 est un schéma électrique simplifié illustrant, sous forme de blocs, un exemple d'un système de recharge d'une batterie électrique 101 (BAT) au moyen d'un module photovoltaïque 103 (MPV).

La batterie 101 comprend une ou plusieurs cellules élémentaires de stockage d'énergie électrique rechargeables (non détaillées) reliées en série et/ou en parallèle entre une borne positive B+ et une borne négative B- de la batterie.

Le module photovoltaïque 103 comprend une ou plusieurs cellules photovoltaïques élémentaires (non détaillées) reliées en série et/ou en parallèle entre une borne positive M+ et une borne négative M- du module.

Le système de la figure 1 comprend un circuit de recharge 105 comprenant des bornes d'entrée I+ et I- reliées, par exemple connectées, respectivement aux bornes de sortie M+ et M- du module 103, et des bornes de sortie O+ et O- reliées, par exemple connectées, respectivement aux bornes B+ et B- de la batterie.

Le circuit de recharge 105 comprend un convertisseur à découpage continu-continu 107 (DC/DC) comportant des bornes d'entrée ci+ et ci- reliées, par exemple connectées, respectivement aux bornes d'entrée I+ et I- du circuit de recharge 105, et des bornes de sortie co+ et co- reliées, par exemple connectées, respectivement aux bornes de sortie O+ et O- du circuit de recharge 105. Le convertisseur à découpage 107 comprend un ou plusieurs interrupteurs de découpage (non détaillés sur la figure 1) commandables pour transférer de l'énergie électrique de ses bornes d'entrée ci+ et ci- vers les bornes de sortie co+ et co- du convertisseur.

Le circuit de recharge 105 comprend en outre un circuit de contrôle 109 (CTRL) adapté à commander le ou les interrupteurs de découpage du convertisseur 107 pour contrôler le transfert d'énergie électrique entre les bornes d'entrée ci+ et ci- et les bornes de sortie co+ et co- du convertisseur. Le circuit de contrôle 109 comprend en particulier une ou plusieurs bornes de commande CMD reliées aux grilles respectives du ou des interrupteurs de découpage du convertisseur 107.

En fonctionnement, le circuit de contrôle 109 tire son alimentation électrique de la batterie 101. Pour cela, le circuit 109 comprend des bornes d'alimentation s+ et s- reliées, par exemple connectées, respectivement aux bornes de sortie O+ et O-du circuit de recharge 105.

Dans l'exemple de la figure 1, le circuit de contrôle 109 est adapté à commander le convertisseur 107 en fonction de la tension et/ou du courant de sortie du module photovoltaïque 103. Pour cela, le circuit de contrôle 109 comprend des bornes de mesure m+ et m- reliées, par exemple connectées, respectivement aux bornes d'entrée I+ et I- du circuit de recharge. A titre d'exemple, le circuit 109 est adapté à rechercher automatiquement le point de puissance maximal du module photovoltaïque 103, qui dépend notamment du niveau d'irradiation du module. Pour cela, le circuit 109 adapte automatiquement la fréquence et/ou le rapport cyclique de commutation des interrupteurs de découpage du convertisseur 107 en fonction de mesures de tension et/ou de courant réalisées via ses bornes m+ et m-, de façon à placer le module photovoltaïque en permanence au plus près de son point de puissance maximal, c'est-à-dire de façon à maximiser la puissance de sortie (i.e. le produit du courant de sortie par la tension de sortie) du module photovoltaïque.

En régime établi, le module photovoltaïque 103 fournit, entre ses bornes M+ et M-, un courant continu I_{M} sous une tension continue V_{M}, et la batterie 101 reçoit, entre ses bornes B+ et B-, un courant continu I_{B} sous une tension continue V_{B}. La conversion continu-continu de la tension V_{M} en la tension V_{B} et du courant I_{M} en le courant I_{B} est assurée par le convertisseur à découpage 107.

La figure 2 reprend les éléments de la figure 1 et illustre plus en détail un exemple de réalisation du convertisseur à découpage 107 du circuit de recharge 105.

Dans cet exemple, le convertisseur 107 est un élévateur de tension. Il comprend une inductance L1 ayant une première extrémité reliée, par exemple connectée, au noeud d'entrée ci+ du convertisseur, et une deuxième extrémité reliée, par exemple connectée, à un noeud intermédiaire n1 du convertisseur. Le convertisseur comprend en outre un interrupteur de découpage K1, par exemple un transistor MOS à canal N, ayant un premier noeud de conduction relié, par exemple connecté, au noeud n1, et un deuxième noeud de conduction relié, par exemple connecté, au noeud d'entrée ci- du convertisseur. La borne de sortie de commande CMD du circuit de contrôle 109 est reliée, par exemple connectée, à une borne de commande de l'interrupteur K1. Dans cet exemple, les noeuds d'entrée ci- et de sortie co- du convertisseur sont connectés. Le convertisseur 107 comprend en outre une diode D1 dont l'anode est reliée, par exemple connectée, au noeud n1 et dont la cathode est reliée, par exemple connectée, au noeud de sortie co+ du convertisseur. Le convertisseur 107 de la figure 2 comprend de plus un condensateur d'entrée C1 dont les électrodes sont reliées, par exemple connectées, respectivement aux bornes d'entrée ci+ et ci- du convertisseur, et un condensateur de sortie C2 dont les électrodes sont reliées, par exemple connectées, respectivement aux bornes de sortie co+ et co- du convertisseur.

En fonctionnement, le circuit de contrôle 109 régule la fréquence et/ou le rapport cyclique de commutation de l'interrupteur K1 pour contrôler le transfert d'énergie électrique entre le module photovoltaïque 103 et la batterie 101.

Plus généralement, le circuit de recharge de la figure 1 est compatible avec toutes ou la plupart des architectures connues de convertisseurs à découpage continu-continu. A titre d'exemple, le convertisseur à découpage 107 peut être un abaisseur de tension, comprenant par exemple les mêmes éléments que dans l'exemple de la figure 2, mais dans lequel l'interrupteur K1 et l'inductance L1 sont reliés en série entre les bornes ci+ et co+ du convertisseur, et dans lequel la diode D1 est reliée, par son anode, aux bornes ci- et co- du convertisseur, et, par sa cathode, au point milieu entre l'interrupteur K1 et l'inductance L1.

Un problème qui se pose dans un système du type décrit en relation avec les figures 1 et 2, est que, en raison de la présence de divers éléments capacitifs dans le circuit de recharge 105 (et notamment du condensateur de sortie C2 dans l'exemple de la figure 2), l'arrêt du fonctionnement du circuit de contrôle 109 n'est pas instantané en cas de déconnexion de la batterie 101. Autrement dit, lorsque la batterie 101 est déconnectée du circuit de recharge 105, le circuit de contrôle 109 continue de commander la commutation du ou des interrupteurs de découpage du convertisseur 107 pendant une période de relaxation correspondant au temps de décharge de la capacité parasite vue entre les bornes d'alimentation s+ et s- du circuit 109. A titre d'exemple, la durée de cette période de relaxation peut être de plusieurs millisecondes à plusieurs centaines de millisecondes, pendant lesquelles le circuit de contrôle 109 continue de commander le convertisseur à découpage 107 pour transférer de l'énergie électrique de ses bornes d'entrée ci+ et ci- vers ses bornes de sortie co+ et co-. Si le module photovoltaïque 103 a été préalablement déconnecté du circuit de recharge, la capacité parasite de sortie du circuit de recharge se décharge jusqu'à provoquer l'arrêt du fonctionnement du circuit de contrôle 109, et donc du convertisseur à découpage 107, lorsque le circuit 109 n'est plus alimenté. Si en revanche le module photovoltaïque 103 n'a pas été déconnecté, de l'énergie électrique produite par le module 103 continue d'être transférée vers la sortie du convertisseur à découpage 107 pendant la période de relaxation. Il en résulte que la capacité parasite de sortie du circuit de recharge ne se décharge pas. Du fait de l'absence de la batterie 101 pour absorber le courant de sortie I_{B} du convertisseur 107, la tension de sortie du circuit de recharge augmente alors très rapidement, jusqu'à la destruction du circuit de contrôle 109 et/ou du convertisseur à découpage 107.

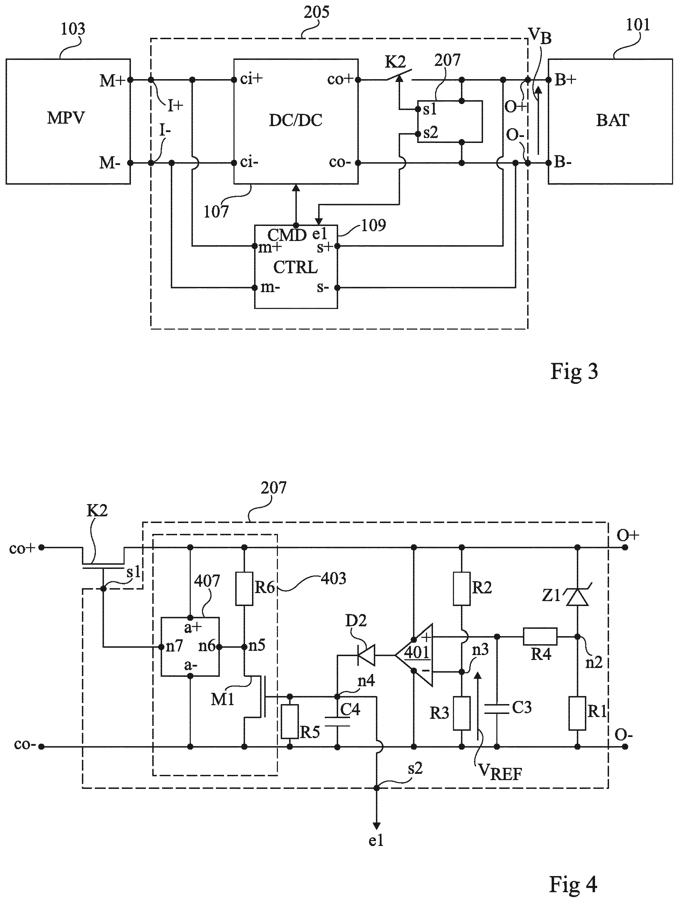

La figure 3 est un schéma électrique simplifié illustrant, sous forme de blocs, un exemple d'un mode de réalisation d'un système de recharge d'une batterie électrique 101, par exemple identique ou similaire à la batterie 101 des figures 1 et 2, au moyen d'un module photovoltaïque 103, par exemple identique ou similaire au module 103 des figures 1 et 2.

Le système de la figure 3 comprend un circuit de recharge 205. Le circuit de recharge 205 comprend les mêmes éléments que le circuit de recharge 105 de la figure 1, agencés sensiblement de la même manière.

Le circuit de recharge 205 de la figure 3 comprend de plus un interrupteur K2 ayant un premier noeud de conduction relié, par exemple connecté, au noeud de sortie co+ du convertisseur à découpage 107, et un deuxième noeud de conduction relié, par exemple connecté, au noeud de sortie O+ du circuit de recharge 205. Autrement dit, dans l'exemple de la figure 3, la borne d'alimentation s+ du circuit de contrôle 109 est séparée de la borne de sortie co+ du convertisseur à découpage 107 par l'interrupteur K2.

Le circuit de recharge 205 de la figure 3 comprend en outre un circuit de détection de surtension 207 connecté aux noeuds O- et O+ de sortie du circuit de recharge. Le circuit 207 est adapté à détecter un dépassement d'un seuil prédéfini V_{TH} par la tension V_{B} entre les bornes O- et O+ du circuit de recharge, et, lorsqu'un dépassement du seuil V_{TH} est détecté, à commander l'ouverture de l'interrupteur K2 et l'arrêt du convertisseur à découpage pendant une période d'inhibition Tᵢₙₕ prédéterminée. Le seuil V_{TH} est choisi supérieur à la tension nominale maximale VBAT_{MAX} de la batterie 101, par exemple compris entre 1,01 et 1,2 fois la tension VBAT_{MAX}.

Dans l'exemple représenté, le circuit de détection 207 comprend une première borne de sortie s1 reliée, par exemple connectée, à une borne de commande de l'interrupteur K2, et une deuxième borne de sortie s2 reliée, par exemple connectée, à une borne d'entrée e1 du circuit de contrôle 109. Lorsque la tension V_{B} entre les bornes de sortie O+ et O- du circuit de recharge dépasse le seuil V_{TH}, le circuit 207 applique, pendant une période Tᵢₙₕ continue démarrant à compter de la détection de la surtension, sur sa borne s1, un signal de commande d'ouverture de l'interrupteur K2, et, sur sa borne s2, un signal de commande de désactivation du convertisseur à découpage. Ainsi, pendant la période Tᵢₙₕ, l'interrupteur K2 est maintenu ouvert, isolant la borne de sortie co+ du convertisseur 107 de la borne de sortie O+ du circuit de recharge, et la commutation du ou des interrupteurs de découpage du convertisseur 107 est interrompue, stoppant le transfert d'énergie électrique des bornes d'entrée ci+ et ci- vers les bornes de sortie co+ et co- du convertisseur.

La période d'inhibition Tᵢₙₕ est choisie supérieure à la période de relaxation correspondant au temps de décharge de la capacité parasite entre les bornes d'alimentation s+ et s- du circuit 109. A titre d'exemple, la période Tᵢₙₕ est comprise entre 10 et 1000 millisecondes, par exemple entre 100 et 500 millisecondes, par exemple de l'ordre de 300 millisecondes.

Si la surtension détectée par le circuit 207 résulte d'une déconnexion intempestive de la batterie 101, sans déconnexion préalable du module photovoltaïque 103, la prévision de la période d'inhibition Tᵢₙₕ laisse le temps aux capacités parasites de sortie du circuit de recharge 205 de se décharger. A l'issue de la période d'inhibition Tᵢₙₕ, le circuit 207 fournit, sur sa borne s1, un signal de commande de fermeture de l'interrupteur K2, et, sur sa borne s2, un signal de commande de réactivation du convertisseur à découpage. Toutefois, la batterie 101 n'étant plus présente et les capacités parasites de sortie du circuit 205 étant déchargées, le circuit de contrôle 109 du convertisseur à découpage n'est plus alimenté (tension V_{B} sensiblement nulle). Ainsi, le fonctionnement du convertisseur à découpage reste interrompu jusqu'à ce que la batterie 101 soit éventuellement reconnectée.

Si la surtension détectée par le circuit 207 résulte d'une autre cause telle que par exemple un impact de foudre sur le module photovoltaïque, le fonctionnement du circuit de recharge reprend normalement à l'issue de la période d'inhibition Tᵢₙₕ, sous réserve que la tension V_{B} entre les bornes O+ et O- du circuit de recharge soit redescendue sous le seuil V_{TH} à l'issue de la période Tᵢₙₕ.

Ainsi, le circuit de recharge 205 de la figure 3 est protégé de façon intrinsèque contre une déconnexion éventuelle de la batterie, et son fonctionnement ne sera pas durablement interrompu en cas de surtension liée à une cause autre qu'une déconnexion de la batterie.

La figure 4 est un schéma électrique plus détaillé illustrant un exemple de réalisation du circuit de détection de surtension 207 et de l'interrupteur K2 du circuit de recharge 205 de la figure 3.

Dans cet exemple, l'interrupteur K2 est un transistor MOS à canal N dont la grille est connectée au noeud de sortie s1 du circuit 207 et dont les noeuds de conduction (source et drain) sont connectés respectivement à la borne de sortie co+ du convertisseur 107 et à la borne de sortie O+ du circuit de recharge 205.

Le circuit 207 comprend une diode Zener Z1 reliée en série avec une résistance R1 entre les bornes de sortie O+ et O-du circuit de recharge 205. Plus particulièrement, dans cet exemple, la diode Zener Z1 a sa cathode reliée, par exemple connectée au noeud O+, et son anode reliée, par exemple connectée, à un noeud intermédiaire n2 du circuit 207, et la résistance R1 a une première extrémité reliée, par exemple connectée au noeud n2 et une deuxième extrémité reliée, par exemple connectée, à la borne O-.

Le circuit 207 comprend de plus un comparateur de tension 401 dont une borne d'entrée positive (+) est reliée au noeud n2 et dont une borne d'entrée négative (-) est reliée à un noeud n3 d'application d'un potentiel de référence. Les bornes d'alimentation du comparateur 401 sont reliées, par exemple connectées, respectivement aux bornes de sortie O+ et O- du circuit de recharge.

Dans cet exemple, le potentiel de référence sur le noeud n3 est fourni par un pont diviseur de tension comprenant une résistance R2 en série avec une résistance R3 entre les bornes de sortie O+ et O- du circuit de recharge. Plus particulièrement, dans cet exemple, la résistance R2 a une première extrémité reliée, par exemple connectée, au noeud O+, et une deuxième extrémité reliée, par exemple connectée, au noeud n3, et la résistance R3 a une première extrémité reliée, par exemple connectée, au noeud n3, et une deuxième extrémité reliée, par exemple connectée, au noeud O-.

Dans l'exemple représenté, le circuit 207 comprend en outre un circuit optionnel de stabilisation de la tension appliquée sur la borne d'entrée positive (+) du comparateur, comprenant une résistance R4 reliant le noeud n2 à l'entrée positive (+) du comparateur 401, et un condensateur C3 reliant l'entrée positive (+) du comparateur 401 à la borne O-.

Le circuit 207 comprend de plus une diode D2 dont l'anode est reliée, par exemple connectée, à la sortie du comparateur 401, et dont la cathode est reliée, par exemple connectée, à un noeud intermédiaire n4 du circuit 207.

Le circuit 207 comprend de plus un circuit de temporisation comprenant un condensateur C4 ayant une première électrode reliée, par exemple connectée, au noeud n4 et une deuxième électrode reliée, par exemple connectée, à la borne O-, et, en parallèle du condensateur C4, une résistance R5 ayant une première extrémité reliée, par exemple connectée, au noeud n4, et une deuxième extrémité reliée, par exemple connectée, à la borne O-.

Dans cet exemple, le noeud de sortie s2 est relié, par exemple connecté, au noeud n4.

Le circuit 207 de la figure 4 comprend de plus un circuit 403 de commande de l'interrupteur K2. Le circuit 403 comprend une résistance R6 en série avec un transistor MOS à canal N M1 entre les bornes O+ et O- du circuit de recharge. Dans l'exemple représenté, la résistance R6 a une première extrémité reliée, par exemple connectée, à la borne O+, et une deuxième extrémité reliée, par exemple connectée, à un noeud intermédiaire n5 du circuit 403, et le transistor M1 a un premier noeud de conduction relié, par exemple connecté, au noeud n5 et un deuxième noeud de conduction relié, par exemple connecté, à la borne O-. La grille du transistor M1 est reliée, par exemple connectée, au noeud n4. Le circuit de commande 403 comprend de plus un circuit à pompe de charge 407 (non détaillé) comprenant des noeuds d'alimentation a+ et a- reliés, par exemple connectés, respectivement aux bornes O+ et O- du circuit de recharge, un noeud d'entrée n6 relié, par exemple connecté, au noeud n5, et un noeud de sortie n7 relié, par exemple connecté au noeud s1.

Le fonctionnement du circuit de détection de surtension 207 de la figure 4 va maintenant être décrit. On considère dans cet exemple que les bornes co- et O- sont connectées à un même noeud d'application d'un potentiel de référence, par exemple la masse, par rapport auquel sont définies toutes les tensions du circuit.

En régime établi, lorsque la tension V_{B} entre les bornes O+ et O- du circuit de recharge est inférieure au seuil d'avalanche V_{Z1} de la diode Zener Z1, la diode Z1 est bloquée et la tension sur le noeud n2 (référencée par rapport à la borne O-) est sensiblement nulle. Il en résulte que la tension de sortie du comparateur 401 est à un état bas (sensiblement nulle). Ainsi, la tension sur le noeud n4 est sensiblement nulle. Le signal s2 est donc à un état bas, interprété par le circuit de contrôle 109 comme un état de commande à l'état actif du convertisseur à découpage 107. Le transistor M1 est quant à lui maintenu ouvert, de sorte que la tension sur le noeud n5 est à un état haut (sensiblement égale à la tension sur le noeud O+), interprété par le circuit de commande 407 comme un signal de commande à l'état fermé de l'interrupteur K2. Le circuit 407 applique ainsi sur le noeud s1 un signal de maintien à l'état fermé du transistor K2, c'est-à-dire une tension supérieure à la tension de source du transistor K2.

Lorsque la tension V_{B} entre les bornes O+ et O- du circuit de recharge dépasse le seuil d'avalanche V_{Z1} de la diode Zener Z1, la diode Z1 entre en conduction, provoquant une augmentation de la tension sur le noeud n2. Lorsque la tension sur le noeud n2 dépasse la tension V_{REF} appliquée sur le noeud n3, la tension de sortie du comparateur 401 passe à l'état haut (sensiblement égale à la tension sur la borne O+). Ceci entraine la charge rapide, par l'intermédiaire de la diode D2, du condensateur C4, marquant le début de la période d'inhibition Tᵢₙₕ du convertisseur à découpage. Le condensateur C4 se décharge ensuite lentement via la résistance R5, la constante de temps R5xC4 fixant la durée de la période Tᵢₙₕ. Pendant la période Tᵢₙₕ, la tension sur le noeud n4 est à un état haut. Le signal s2 est donc à un état haut, interprété par le circuit de contrôle 109 comme un état de commande à l'état inactif du convertisseur à découpage 107. Le transistor M1 est quant à lui maintenu fermé, de sorte que la tension sur le noeud n5 est à un état bas (sensiblement égale à la tension sur le noeud O-), interprété par le circuit de commande 407 comme un signal de commande à l'état ouvert de l'interrupteur K2. Le circuit 407 applique ainsi sur le noeud s1 un signal de maintien à l'état ouvert du transistor K2. On notera que dans cet exemple, le seuil de surtension V_{TH} provoquant l'ouverture de l'interrupteur K2 et l'arrêt du convertisseur à découpage est sensiblement égal à V_{Z1}+V_{REF}. A titre d'exemple, la valeur V_{REF}, fixée par les valeurs des résistances R2 et R3, est comprise entre 0,1 et 1 V, par exemple de l'ordre de 0,2 V.

On notera que dans l'exemple de la figure 4, l'interrupteur K2 est un transistor MOS à canal N. Un avantage d'un tel interrupteur est qu'il génère des pertes en conduction relativement faibles par rapport à un transistor MOS à canal P. Toutefois, en contrepartie, sa commande est plus complexe à mettre en oeuvre puisqu'elle nécessite l'application sur sa grille d'une tension supérieure à la tension présente sur la borne O+ du circuit de recharge (pour maintenir l'interrupteur K2 à l'état passant).

A titre de variante, l'interrupteur K2 peut être remplacé par un transistor MOS à canal P, auquel cas le circuit de commande 403 peut être omis et la grille du transistor K2 directement connectée au noeud n4.

Plus généralement, tout autre interrupteur commandable à l'état ouvert et à l'état fermé peut être utilisé pour réaliser l'interrupteur K2.

Des modes de réalisation particuliers ont été décrits. Diverses variantes et modifications apparaîtront à l'homme de l'art. En particulier, les modes de réalisation décrits ne se limitent pas à l'exemple particulier de réalisation du circuit de détection de surtension 207 décrit en relation avec la figure 4. Plus généralement, l'homme du métier saura, à partir des indications fonctionnelles de la présente description, prévoir d'autres manières de réaliser le circuit 207, en électronique analogique et/ou en électronique numérique (par exemple au moyen d'un microcontrôleur).

## Revendications

1. Circuit (205) de recharge d'une batterie électrique (101) au moyen d'un module photovoltaïque (103), comportant :
des première (I+) et deuxième (I-) bornes d'entrée destinées à être reliées respectivement à des première (M+) et deuxième (M-) bornes du module photovoltaïque ;
des première (O+) et deuxième (O-) bornes de sortie destinées à être reliées respectivement à des première (B+) et deuxième (B-) bornes de la batterie ;
un convertisseur à découpage (107) comportant des première (ci+) et deuxième (ci-) bornes d'entrée reliées respectivement aux première (I+) et deuxième (I-) bornes d'entrée du circuit de recharge et des première (co+) et deuxième (co-) bornes de sortie reliées respectivement aux première (O+) et deuxième (O-) bornes de sortie du circuit de recharge ;
un circuit de contrôle (109) du convertisseur à découpage (107), comportant des première (s+) et deuxième (s-) bornes d'alimentation reliées respectivement aux première (O+) et deuxième (O-) bornes de sortie du circuit de recharge ;
un interrupteur de protection (K2) reliant la première borne de sortie (co+) du convertisseur à découpage à la première borne de sortie (O+) du circuit de recharge ; et **caractérisé par** un circuit de détection de surtension (207) configuré pour, lorsque la tension entre les première (O+) et deuxième (O-) bornes de sortie du circuit de recharge dépasse un seuil, commander l'ouverture de l'interrupteur de protection (K2) et l'arrêt du convertisseur à découpage (107) pendant une période d'inhibition prédéterminée.

2. Circuit de recharge (205) selon la revendication 1, dans lequel le circuit de détection de surtension (207) est en outre configuré pour, à l'issue de la période d'inhibition, commander la fermeture de l'interrupteur de protection (K2) et le redémarrage du convertisseur à découpage (107).

3. Circuit de recharge (205) selon la revendication 1 ou 2, dans lequel le circuit de contrôle (109) est configuré pour commander le convertisseur à découpage (107) en fonction de la tension et/ou du courant de sortie du module photovoltaïque (103), mesurés sur les première (I+) et/ou deuxième (I-) bornes d'entrée du circuit de recharge.

4. Circuit de recharge (205) selon la revendication 3, dans lequel le circuit de contrôle (109) est configuré pour adapter automatiquement la commande du convertisseur à découpage (107) de façon à maximiser la puissance de sortie du module photovoltaïque.

5. Circuit de recharge (205) selon l'une quelconque des revendications 1 à 4, dans lequel le circuit de détection de surtension (207) comprend un comparateur (401) dont la sortie est reliée à un noeud de recharge (n4) d'un circuit de temporisation (C4, R5) par l'intermédiaire d'une diode (D2).

6. Circuit de recharge (205) selon la revendication 5, dans lequel le circuit de temporisation comprend un premier condensateur (C4) et une première résistance (R5) reliés en parallèle entre le noeud de recharge (n4) du circuit de temporisation et la deuxième borne de sortie (O-) du circuit de recharge (205).

7. Circuit de recharge (205) selon la revendication 5 ou 6, dans lequel le circuit de détection de surtension (207) comprend une diode Zener (Z1) reliée en série avec une deuxième résistance (R1) entre les première (O+) et deuxième (O-) bornes de sortie du circuit de recharge, le comparateur ayant une borne d'entrée positive (+) reliée au point milieu entre la diode Zener (Z1) et la deuxième résistance (R1) et une borne d'entrée négative reliée à un noeud (n3) d'application d'une tension de référence.

8. Circuit de recharge (205) selon la revendication 7, dans lequel le circuit de détection de surtension (207) comprend en outre un pont diviseur de tension résistif comprenant une troisième résistance (R2) en série avec une quatrième résistance (R3) entre les première (O+) et deuxième (O-) bornes de sortie du circuit de recharge (205), le noeud (n3) d'application de la tension de référence étant relié au point milieu entre les troisième (R2) et quatrième (R3) résistances.

9. Circuit de recharge (205) selon l'une quelconque des revendications 5 à 8, dans lequel le noeud de recharge (n4) du circuit de temporisation est relié à une borne de commande de l'interrupteur de protection (K2), et à une borne de commande du circuit de contrôle (109) du convertisseur à découpage (107).

10. Système comportant un module photovoltaïque (103), une batterie électrique (101) et un circuit de recharge (205) selon l'une quelconque des revendications 1 à 9, dans lequel les première (I+) et deuxième (I-) bornes d'entrée du circuit de recharge sont reliées respectivement à des première (M+) et deuxième (M-) bornes du module photovoltaïque, et dans lequel les première (O+) et deuxième (O-) bornes de sortie du circuit de recharge sont reliées respectivement à des première (B+) et deuxième (B-) bornes de la batterie.

## Patentansprüche

1. Schaltung (205) zum Laden einer elektrischen Batterie (101) mittels eines Photovoltaikmoduls (103), die Folgendes aufweist:
erste (I+) und zweite (I-) Eingangsanschlüsse, die jeweils zur Koppelung mit ersten (M+) und zweiten (M-) Anschlüssen des Photovoltaikmoduls vorgesehen sind;
erste (O+) und zweite (O-) Ausgangsanschlüsse, die jeweils zur Koppelung mit ersten (B+) und zweiten (B-) Anschlüssen der Batterie vorgesehen sind;
einen Schaltleistungswandler (107), der erste (ci+) und zweite (ci-) Eingangsanschlüsse aufweist, die jeweils mit den ersten (I+) und zweiten (I-) Eingangsanschlüssen der Ladeschaltung gekoppelt sind, und erste (co+) und zweite (co-) Ausgangsanschlüsse, die jeweils mit den ersten (O+) und zweiten (O-) Ausgangsanschlüssen der Ladeschaltung gekoppelt sind;
eine Schaltung (109) zum Steuern des Schaltleistungswandlers (107), der erste (s+) und zweite (s-) Leistungslieferanschlüsse aufweist, die jeweils mit den ersten (O+) und zweiten (O-) Ausgangsanschlüssen der Ladeschaltung gekoppelt sind;
einen Schutzschalter (K2), der den ersten Ausgangsanschluss (co+) des Schaltleistungswandlers mit dem ersten Ausgangsanschluss (O+) der Ladeschaltung koppelt; und **gekennzeichnet durch**
eine Überspannungsdetektionsschaltung (207), die konfiguriert ist, um eine Anweisung zum Abschalten des Schutzschalters (K2) und zum Stoppen des Schaltleistungswandlers (107) für eine vorbestimmte Hemmungs- bzw. Begrenzungsperiode zu senden, wenn die Spannung zwischen den ersten (O+) und zweiten (O-) Ausgangsanschlüssen der Ladeschaltung eine Schwelle überschreitet.

2. Ladeschaltung (205) nach Anspruch 1, wobei die Überspannungsdetektionsschaltung (207) weiter konfiguriert ist, um am Ende der Hemmungs- bzw. Begrenzungsperiode eine Anweisung zum Anschalten des Schutzschalters (K2) und zum erneuten Starten des Schaltleistungswandlers (107) zu senden.

3. Ladeschaltung (205) nach Anspruch 1 oder 2, wobei die Steuerschaltung (109) konfiguriert ist, um den Schaltleistungswandler (107) gemäß der Ausgangsspannung und/oder dem Ausgangsstrom des Photovoltaikmoduls (103) zu steuern, und zwar gemessen an den ersten (I+) und/oder zweiten (I-) Eingangsanschlüssen der Ladeschaltung.

4. Ladeschaltung (205) nach Anspruch 3, wobei die Steuerschaltung (109) konfiguriert ist, um automatisch die Steuerung des Schaltleistungswandlers (107) anzupassen, um die Ausgangsleistung des Photovoltaikmoduls zu maximieren.

5. Ladeschaltung (205) nach einem der Ansprüche 1 bis 4, wobei die Überspannungsdetektionsschaltung (207) einen Komparator bzw. ein Vergleichselement (401) aufweist, dessen Ausgang mit einem Ladeknoten (n4) einer Zeitgeber- bzw. Timer-Schaltung (C4, R5) über eine Diode (D2) gekoppelt ist.

6. Ladeschaltung (205) nach Anspruch 5, wobei die Timer-Schaltung einen ersten Kondensator (C4) und einen ersten Widerstand (R5) aufweist, die parallel zwischen dem Ladeknoten (n4) der Timer-Schaltung und dem zweiten Ausgangsanschluss (O-) der Ladeschaltung (205) angekoppelt ist.

7. Ladeschaltung (205) nach Anspruch 5 oder 6, wobei die Überspannungsdetektionsschaltung (207) eine Zener-Diode (Z1) aufweist, die in Reihe mit einem zweiten Widerstand (R1) zwischen den ersten (O+) und zweiten (O-) Ausgangsanschlüssen der Ladeschaltung angeschlossen ist, wobei das Vergleichselement einen positiven Eingangsanschluss (+) hat, der mit dem Übergangspunkt der Zener-Diode (Z1) und des zweiten Widerstandes (R1) gekoppelt ist, und einen negativen Eingangsanschluss, der mit einem Knoten (n3) zum Anlegen einer Referenzspannung gekoppelt ist.

8. Ladeschaltung (205) nach Anspruch 7, wobei die Überspannungsdetektionsschaltung (207) weiter eine resistive Spannungsteilungsbrücke aufweist, die einen dritten Widerstand (R2) in Reihe mit einem vierten Widerstand (R3) zwischen den ersten (O+) und zweiten (O-) Ausgangsanschlüssen der Ladeschaltung (205) aufweist, wobei der Knoten (n3) zum Anlegen der Referenzspannung mit dem Übergangspunkt der dritten (R2) und vierten (R3) Widerstände gekoppelt ist.

9. Ladeschaltung (205) nach einem der Ansprüche 5 bis 8, wobei der Ladeknoten (n4) der Timer-Schaltung mit einem Steueranschluss des Schutzschalters (K2) und mit einem Steueranschluss der Schaltung (109) zur Steuerung des Schaltleistungswandlers (107) gekoppelt ist.

10. System, welches ein Photovoltaikmodul (103), eine elektrische Batterie (101) und die Ladeschaltung (205) nach einem der Ansprüche 1 bis 9 aufweist, wobei die ersten (I+) und zweiten (I-) Eingangsanschlüsse der Ladeschaltung jeweils mit ersten (M+) und zweiten (M-) Anschlüssen des Photovoltaikmoduls gekoppelt sind, und wobei die ersten (O+) und zweiten (O-) Ausgangsanschlüsse der Ladeschaltung jeweils mit den ersten (B+) und zweiten (B-) Anschlüssen der Batterie gekoppelt sind.

## Claims

1. A circuit (205) for charging an electric battery (101) by means of a photovoltaic module (103), comprising:
first (I+) and second (I-) input terminals intended to be respectively coupled to fist (M+) and second (M-) terminals of the photovoltaic module;
first (O+) and second (O-) output terminals intended to be respectively coupled to first (B+) and second (B-) terminals of the battery;
a switched-mode power converter (107) comprising first (ci+) and second (ci-) input terminals respectively coupled to the first (I+) and second (I-) input terminals of the charging circuit and first (co+) and second (co-) output terminals respectively coupled to the first (O+) and second (O-) output terminals of the charging circuit;
a circuit (109) for controlling the switched-mode power converter (107) comprising first (s+) and second (s-) power supply terminals respectively coupled to the first (O+) and second (O-) output terminals of the charging circuit;
a protection switch (K2) coupling the first output terminal (co+) of the switched-mode power converter to the first output terminal (O+) of the charging circuit; and **characterized by** an overvoltage detection circuit (207) configured to, when the voltage between the first (O+) and second (O-) output terminals of the charging circuit exceeds a threshold, send an order to turn off the protection switch (K2) and stop the switched-mode power converter (107) for a predetermined inhibition period.

2. The charging circuit (205) of claim 1, wherein the overvoltage detection circuit (207) is further configured to, at the end of the inhibition period, send an order to turn on the protection switch (K2) and restart the switched-mode power converter (107).

3. The charging circuit (205) of claim 1 or 2, wherein the control circuit (109) is configured to control the switched-mode power converter (107) according to the output voltage and/or current of the photovoltaic module (103), measured on the first (I+) and/or second (I-) input terminals of the charging circuit.

4. The charging circuit (205) of claim 3, wherein the control circuit (109) is configured to automatically adapt the control of the switched-mode power converter (107) to maximize the output power of the photovoltaic module.

5. The charging circuit (205) of any of claims 1 to 4, wherein the overvoltage detection circuit (207) comprises a comparator (401) having its output coupled to a charging node (n4) of a timer circuit (C4, R5) via a diode (D2).

6. The charging circuit (205) of claim 5, wherein the timer circuit comprises a first capacitor (C4) and a first resistor (R5) coupled in parallel between the charging node (n4) of the timer circuit and the second output terminal (O-) of the charging circuit (205).

7. The charging circuit (205) of claim 5 or 6, wherein the overvoltage detection circuit (207) comprises a Zener diode (Z1) series-coupled with a second resistor (R1) between the first (O+) and second (O-) output terminals of the charging circuit, the comparator having a positive input terminal (+) coupled to the junction point of the Zener diode (Z1) and of the second resistor (R1) and a negative input terminal coupled to a node (n3) of application of a reference voltage.

8. The charging circuit (205) of claim 7, wherein the overvoltage detection circuit (207) further comprises a resistive voltage dividing bridge comprising a third resistor (R2) in series with a fourth resistor (R3) between the first (O+) and second (O-) output terminals of the charging circuit (205), the node (n3) of application of the reference voltage being coupled to the junction point of the third (R2) and fourth (R3) resistors.

9. The charging circuit (205) of any of claims 5 to 8, wherein the charging node (n4) of the timer circuit is coupled to a control terminal of the protection switch (K2) and to a control terminal of the circuit (109) for controlling the switched-mode power converter (107).

10. A system comprising a photovoltaic module (103), an electric battery (101), and the charging circuit (205) of any of claims 1 to 9, wherein the first (I+) and second (I-) input terminals of the charging circuit are respectively coupled to first (M+) and second (M-) terminals of the photovoltaic module, and wherein the first (O+) and second (O-) output terminals of the charging circuit are respectively coupled to first (B+) and second (B-) terminals of the battery.
